(19) Europäisches Patentamt
European Patent Office
Office européen des brevets

(11) Veröffentlichungsnummer: **0 299 920 A1**

(12) **EUROPÄISCHE PATENTANMELDUNG**

(21) Anmeldenummer: **88810456.9**

(22) Anmeldetag: **04.07.88**

(51) Int. Cl.[4]: **C 07 F 9/44**
C 07 F 9/24, C 07 F 9/65,
A 01 N 57/28

(30) Priorität: **08.07.87 CH 2585/87**
**06.05.88 CH 1732/88**

(43) Veröffentlichungstag der Anmeldung:
**18.01.89 Patentblatt 89/03**

(84) Benannte Vertragsstaaten:
**AT BE CH DE ES FR GB GR IT LI NL**

(71) Anmelder: **CIBA-GEIGY AG**
**Klybeckstrasse 141**
**CH-4002 Basel (CH)**

(72) Erfinder: **Kristiansen, Odd, Dr.**
**Delligrabenstrasse 7**
**CH-4313 Möhlin (CH)**

(54) **Substituierte Phosphonsäure- und Phosphorsäureamide.**

(57) Neue substituierte N-Alkyl-N-alkoxy-phosphonsäure- oder thiophosphonsäureamide sowie N-Alkyl-N-alkoxy-phosphorsäure- oder -thiophosphorsäureamide der Formel

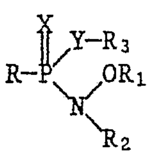,

worin R $C_1$-$C_4$-Alkyl oder $C_1$-$C_4$-Alkoxy;
$R_1$ und $R_3$ unabhängig voneinander $C_1$-$C_4$-Alkyl;
$R_2$ Wasserstoff, $C_1$-$C_4$-Alkyl oder zusammen mit $R_1$ den Rest $-(CH_2)_4-$; und
X und Y unabhängig voneinander Sauerstoff oder Schwefel bedeuten, mit der Massgabe, dass mindestens einer der Reste X oder Y Schwefel bedeutet, wenn $R_2$ die Bedeutung von Wasserstoff hat.

Es werden beschrieben Verfahren zur Herstellung dieser Verbindungen und ihre Verwendung in der Schädlingsbekämpfung, insbesondere zur Bekämpfung von Insekten und Vertretern der Ordnung Akarina.

EP 0 299 920 A1

## Beschreibung

### Substituierte Phosphonsäure- und Phosphorsäureamide

Die vorliegende Erfindung betrifft neuartige substituierte N-Alkyl-N-alkoxy-phosphonsäure- oder -thiophosphonsäureamide sowie N-Alkyl-N-alkoxy-phosphorsäure- oder -thiophosphorsäureamide, Verfahren zu ihrer Herstellung und ihre Verwendung in der Schädlingsbekämpfung.

Die erfindungsgemässen Verbindungen haben die Formel I

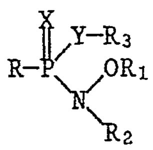 (I)

worin R $C_1$-$C_4$-Alkyl oder $C_1$-$C_4$-Alkoxy;
$R_1$ und $R_3$ unabhängig voneinander $C_1$-$C_4$-Alkyl;
$R_2$ Wasserstoff, $C_1$-$C_4$-Alkyl oder zusammen mit $R_1$ den Rest $-(CH_2)_4-$; und
X und Y unabhängig voneinander Sauerstoff oder Schwefel bedeuten, mit der Massgabe, dass mindestens einer der Reste X oder Y Schwefel bedeutet, wenn $R_2$ die Bedeutung von Wasserstoff hat.

Die Alkyl- oder Alkoxygruppen können geradkettig oder verzweigt sein. Beispiele solcher Gruppen sind z.B. Methyl, Methoxy, Aethyl, Aethoxy, n-Propyl, Isopropyl, n-Butyl, i-Butyl, s-Butyl, t-Butyl.

Bevorzugte erfindungsgemässe Verbindungen der Formel I sind dadurch gekennzeichnet, dass
R $C_1$-$C_4$-Alkyl oder $C_1$-$C_4$-Alkoxy;
$R_1$, $R_2$ und $R_3$ unabhängig voneinander $C_1$-$C_4$-Alkyl oder $R_1$ zusammen mit $R_2$ den Rest $-(CH_2)_4-$ ; und
X und Y unabhängig voneinander Sauerstoff oder Schwefel bedeuten.

Weiterhin bevorzugt werden erfindungsgemäss Verbindungen der Formel I, worin
R $C_1$-$C_4$-Alkyl;
$R_1$ und $R_2$ Methyl oder zusammen den Rest $-(CH_2)_4-$ ;
$R_3$ $C_3$-$C_4$-Alkyl;
X Sauerstoff oder Schwefel und
Y Schwefel
bedeuten.

Insbesondere bevorzugt werden Verbindungen der Formel I, die dadurch gekennzeichnet sind, dass R Methyl oder Aethyl bedeutet.

Hervorzuheben sind wegen ihrer biologischen Wirksamkeit die erfindungsgemässen Verbindungen der Formel I worin X und Y Schwefel bedeuten.

Besondere Bedeutung kommt auch denjenigen Verbindungen der Formel I zu, in denen $R_3$ n-Propyl, i-Propyl, s-Butyl oder t-Butyl bedeutet.

Die Verbindungen der Formel I können in an sich bekannter Weise dadurch hergestellt werden, dass man eine Verbindung der Formel II

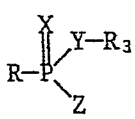 (II)

mit einer Verbindung der Formel III

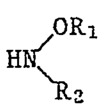 (III)

umsetzt, wobei in der Formel II und III
R, $R_1$, $R_2$, $R_3$, X und Y die vorstehend angegebenen Bedeutungen haben und Z für Halogen, vorzugsweise Chlor, steht.

Die Durchführung des vorliegenden Verfahrens erfolgt vorzugsweise in Gegenwart eines gegenüber den Umsetzungsteilnehmern inerten Lösungs-oder Verdünnungsmittels und mindestens eines Aequivalents eines Säureacceptors bzw. einer basischen Substanz. Als Säureacceptoren, bzw. Basen kommen insbesondere

tertiäre Amine, wie Trialkylamine und Pyridin, ferner Hydride, Hydroxide, Oxide und Carbonate von Alkali-und Erdalkalimetallen sowie auch Alkalimetallalkoholate, wie z.B. Kalium-t-butylat und Natriummethylat usw., in Betracht. Die Reaktionstemperatur liegt je nach der Art der verwendeten Lösungsmittel üblicherweise im Bereich von -5°C bis +140°C, vorzugsweise zwischen 0 und 70°C.

Das vorstehend aufgeführte Verfahren wird bevorzugt bei normalem oder erhöhtem Druck durchgeführt. Als inerte Lösungs- oder Verdünnungsmittel eignen sich z.B. Aether und ätherartige Verbindungen, wie Diäthyläther, Diisopropyläther, Dioxan, 1,2-Dimethoxyäthan und Tetrahydrofuran; Amide, wie N,N-dialkylierte Carbonsäureamide; aliphatische, aromatische sowie halogenierte Kohlenwasserstoffe, wie z.B. Benzol, Toluol, Xylole, Chloroform, Methylenchlorid und Chlorbenzol; sowie Dimethylsulfoxid.

Die als Ausgangsstoffe verwendeten N,0-Dialkylhydroxylamine der Formeln III sind bekannt und allgemein zugänglich, die Phosphonsäurehalogenide der Formel II sind ebenfalls bekannt oder können, falls sie neu sind, analog bekannten Methoden hergestellt werden (vgl. z.B. US-PS 4,428,945, 4,473,562, 4,535,077 und EP-PS 0.025.270). Sie bilden dann ebenfalls einen Gegenstand der vorliegenden Erfindung.

Es ist bereits aus JP-PS 87-045.876 bekannt, dass N-Alkylthiophosphorsäureamide insektizide und mitizide Wirksamkeit besitzen. Weiterhin sind aus US-PS 4.390.529 N-Alkyl-thiophosphonsäureamide und aus der EP-Patentanmeldung 0.241.098 N-Alkylsulfonyl-thiophosphonsäureamide als Pestizide bekannt. N-Formylthiophosphonsäureamide mit insektizider, mitizider und nematizider Wirkung werden in US-PS 4.683.224 sowie den EP-Patentanmeldungen 164.308 und 215.509 beschrieben. Demgegenüber unterscheiden sich die erfindungsgemässen Verbindungen der Formel I struktrurell im wesentlichen durch das Vorliegen einer Alkoxy-substituierten Amidogruppe. Es sind ferner bereits herbizid-synergistisch wirkende N-Alkoxyphosphor- und -phosphonsäureamide in der DE-OS 3 316 891 beschrieben worden, jedoch unterscheiden sich diese Verbindungen in ihrer Struktur dadurch von den erfindungsgemässen Verbindungen, dass sie eine 2,2,2-Trihalogenäthyl-phosphor- bzw. -phosphonsäure-Estergruppe aufweisen.

Es wurde nun überraschenderweise gefunden, dass sich die Verbindungen der Formel I zur Bekämpfung von verschiedenartigen Schädlingen an Tieren und Pflanzen sowie im Boden eignen. So können sie zur Bekämpfung von Insekten, z.B. der Ordnung Lepidoptera, Coleoptera, Homoptera, Heteroptera, Diptera, Thysano-ptera, Orthoptera, Anoplura, Siphonaptera, Mallophaga, Thysanura, Isoptera, Psocoptera und Hymenoptera und von Milben und Zecken der Ordnung Acarina eingesetzt werden.

So eignen sich Verbindungen der Formel I zur Bekämpfung von pflanzenschädigenden Insekten in Zier- und Nutzpflanzungen, wie in Baumwollkulturen (z.B. Spodoptera littoralis und Heliothis virescens). Die Verbindungen der Formel I haben speziell eine günstige Wirkung gegen -Bodeninsekten (z.B. Aulacophora femoralis, Chortophila brassicae, Diabrotica balteata, Pachnoda savignyi und Scotia ypsilon). Ferner zeichnen sich die erfindungsgemässen Verbindungen aus durch gute Wirkung gegen larvale Insektenstadien und Nymphen, insbesondere von fressenden Schadinsekten. Auch können die Verbindungen der Formel I mit Erfolg gegen pflanzenschädigende Zikaden, speziell in Reiskulturen, zum Einsatz gelangen.

Die erfindungsgemässen Verbindungen der Formeln I besitzen darüberhinaus Wirksamkeit sowohl gegen pflanzenschädigende Akariden (Spinnmilben: z.B. der Familien Tetranychidae, Tarsonemidae, Eriophydae, Tyroglyphidae und Glycyphagidae) als auch gegen ektoparasitäre Akariden (Milben und Zecken: z.B. der Familien Ixodidae, Argasidae, Sarcoptidae und Dermanyssidae), welche Nutztiere befallen.

Die pestizide Wirkung der erfindungsgemässen Verbindungen lässt sich durch Zusatz von anderen Insektiziden und/oder Akariziden wesentlich verbreitern und an gegebene Umstände anpassen. Als Zusätze eignen sich z.B. org. Phosphorverbindungen; Nitrophenole und deren Derivate; Formamidine; Harnstoffe; pyrethrinartige Verbindungen sowie Karbamate und chlorierte Kohlenwasserstoffe.

Die gute pestizide Wirkung der erfindungsgemässen Verbindungen der Formel I entspricht einer Abtötungsrate (Mortalität) von mindestens 50-60 % der erwähnten Schädlinge.

Die Verbindungen der Formel I werden in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnis-sen entsprechend gewählt.

Die Formulierungen, d.h. die mindestens einen Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyl-äther, Essigester, Propylmyristat oder Propylpalmitat, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; Silikonöle oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der

physikalischen Eigenschaften können auch hochdisperse Kieselsäure oder hochdisperse saugfähige Polymerisate zugesetzt werden. Als gekörnte, adsorptive Granulatträger kommen poröse Typen, wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation-und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Tallöl gewonnen werden können. Ferner sind auch die Fettsäuremethyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes und Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykoleinheit 1 bis 5-Aethylenglykoleinheiten.

Als Beispiele nichtionischer Tenside seien Nonylphenolpolyäthoxyäthanole, Ricinusölpolyglycoläther, Ricinusölthioxilat, Polypropylen-Polyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)-äthylammoniumbromid.

Die in der Formulierungstechnik gebräuchlichen Tenside sind u.a. in folgenden Publikationen beschrieben:

"McCutcheon's Detergents and Emulsifiers Annual" MC Publishing Corp., Ridgewood, New Jersey, 1979;
Dr. Helmut Stache "Tensid Taschenbuch", Carl Hanser Verlag München/Wien 1981.

Die pestiziden Zubereitungen enthalten in der Regel 0,1 bis 99 %, insbesondere 0,1 bis 95 %, Wirkstoff der Formel I, 1 bis 99,9 % eines festen oder flüssigen Zusatzstoffes und 0 bis 25 %, insbesondere 0,1 bis 25 %, eines Tensides, wobei sich die %-Angaben auf das Gewicht beziehen.

Während als Handelsware eher konzentrierte Mittel bevorzugt werden, verwendet der Endverbraucher in der Regel verdünnte Mittel bzw. Zubereitungen, die z.B. 0,1 bis 1000 ppm Wirkstoff enthalten können.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Beispiel 1: Herstellung von N-Methyl-N-methoxy-S-(sek.butyl)-äthandithiophosphonsäureamid:

Ein Gemisch aus 1,41 g N,0-Dimethylhydroxylamin und 2,34 g Triäthylamin wird zu einer Lösung von 5 g S-(sek.Butyl)-äthandithiophosphonsäurechlorid in 20 ml Methylenchlorid getropft. Das Gemisch wird 1 Stunde bei Raumtemperatur gerührt und anschliessend 8 Stunden am Rückfluss erhitzt. Nach dem Abkühlen wird das Reaktionsgemisch mit 20 ml Wasser ausgeschüttelt. Die abgetrennte organische Phase wird mit Natriumsulfat getrocknet und das Rohprodukt nach dem Eindampfen mittels Säulenchromatographie ($SiO_2$, Hexan-Methylenchlorid 1:1) gereinigt. Es wird die Titelverbindung der Formel

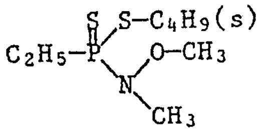

als farblose Flüssigkeit mit einer Refraktion von $n_D^{22}$ = 1,5290 (Verbindung Nr. 1) erhalten.

In analoger Weise wie vorstehend beschrieben werden die folgenden Verbindungen der Formel I hergestellt:

| Verb. Nr. | X | Y | R | $R_1$ | $R_2$ | $R_3$ | phys. Daten |
|---|---|---|---|---|---|---|---|
| 2 | S | S | $-C_2H_5$ | $-CH_3$ | $-CH_3$ | $-C_3H_7(n)$ | $n_D^{21}$ = 1,5381 |
| 3 | S | S | $-C_2H_5$ | $-(CH_2)_4-$ | | $-C_4H_9(s)$ | $n_D^{20}$ = 1,5450 |
| 4 | S | S | $-CH_3$ | $-CH_3$ | $-CH_3$ | $-C_4H_9(t)$ | $n_D^{22}$ = 1,5379 |
| 5 | S | S | $-CH_3$ | $-(CH_2)_4-$ | | $-C_4H_9(t)$ | $n_D^{22}$ = 1,5538 |
| 6 | S | S | $-C_2H_5$ | $-(CH_2)_4-$ | | $-C_4H_9(t)$ | $n_D^{22}$ = 1,5492 |
| 7 | S | S | $-C_2H_5$ | $-CH_3$ | $-CH_3$ | $-C_4H_9(t)$ | $n_D^{22}$ = 1,5353 |
| 8 | O | S | $-CH_3$ | $-(CH_2)_4-$ | | $-C_4H_9(t)$ | $n_D^{20}$ = 1,5077 |
| 9 | O | S | $-CH_3$ | $-CH_3$ | $-CH_3$ | $-C_4H_9(t)$ | $n_D^{20}$ = 1,4843 |
| 10 | S | O | $-OC_2H_5$ | $-(CH_2)_4-$ | | $-C_4H_9(s)$ | $n_D^{21}$ = 1,4846 |
| 11 | S | S | $-OC_2H_5$ | $-(CH_2)_4-$ | | $-C_4H_9(s)$ | $n_D^{23}$ = 1,5262 |
| 12 | S | S | $-OC_2H_5$ | $-CH_3$ | $-CH_3$ | $-C_4H_9(s)$ | $n_D^{23}$ = 1,5081 |
| 13 | S | S | $-C_2H_5$ | $-CH_3$ | H | $-C_4H_9(s)$ | $n_D^{23}$ = 1,5406 |
| 14 | S | S | $-C_2H_5$ | $-CH_3$ | H | $-C_4H_9(t)$ | $n_D^{23}$ = 1,5451 |

In entsprechender Weise wie oben angegeben sind auch die folgenden Verbindungen der Formel I herstellbar:

| X | Y | R | $R_1$ | $R_2$ | $R_3$ |
|---|---|---|---|---|---|
| S | O | $C_2H_5$ | $CH_3$ | $CH_3$ | $C_4H_9(s)$ |
| S | O | $C_2H_5$ | $-(CH_2)_4-$ | | $C_4H_9(t)$ |
| S | S | $C_2H_5$ | $C_2H_5$ | $CH_3$ | $C_4H_9(t)$ |
| S | S | $CH_3$ | $CH_3$ | $C_3H_7(i)$ | $C_4H_9(s)$ |

Beispiel 2:

Formulierungen für flüssige Wirkstoffe der Formel I gemäss Beispiel 1 (% = Gewichtsprozent)

| 1. Emulsions-Konzentrate | a) | b) | c) |
|---|---|---|---|
| Wirkstoff gemäss Herstellungsbeispielen | 25 % | 40 % | 50 % |
| Ca-Dodecylbenzolsulfonat | 5 % | 8 % | 6 % |
| Ricinusöl-polyäthylenglykoläther (36 Mol AeO) | 5 % | - | - |
| Tributylphenol-polyäthylenglykoläther (30 Mol AeO) | - | 12 % | 4 % |
| Cyclohexanon | - | 15 % | 20 % |
| Xylolgemisch | 65 % | 25 % | 20 % |

Aus solchen Konzentration können durch Verdünnen mit Wasser Emulsionen jeder gewünschten Konzentration hergestellt werden.

| 2. Lösungen | a) | b) | c) | d) |
|---|---|---|---|---|
| Wirkstoff gemäss Herstellungsbeispielen | 80 % | 10 % | 5 % | 95 % |
| Aethylenglykol-monomethyläther | 20 % | - | - | - |
| Polyäthylenglykol (MG 400) | - | 70 % | - | - |
| N-Methyl-2-pyrrolidon | - | 20 % | - | - |
| Epoxidiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| 3. Granulate | a) | b) |
|---|---|---|
| Wirkstoff gemäss Herstellungsbeispielen | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff gemäss Herstellungsbeispielen | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

Beispiel 3: Wirkung gegen Musca domestica

Je 50 g frisch zubereitetes CSMA-Nährsubstrat für Maden werden in Becher eingewogen. Von einer 1 Gew.-%igen acetonischen Lösung des betreffenden Wirkstoffes wird eine bestimmte Menge auf das in den Bechern befindliche Nährsubstrat pipettiert, so dass sich eine Wirkstoffkonzentration von 400 ppm ergibt. Nach dem Durchmischen des Substrates lässt man das Aceton mindestens 20 Stunden lang verdampfen.

Dann werden pro Wirkstoff je 25 eintägige Maden von Musca domestica in die das so behandelte Nährsubstrat enthaltenden Becher gegeben. Nachdem sich die Maden verpuppt haben, werden die gebildeten Puppen durch Ausschwemmen mit Wasser von dem Substrat abgetrennt und in mit Siebdeckeln verschlossenen Gefässen deponiert.

Die pro Ansatz ausgeschwemmten Puppen werden gezählt (toxischer Einfluss des Wirkstoffes auf die Madenentwicklung). Dann wird nach 10 Tagen die Anzahl der aus den Puppen geschlüpften Fliegen bestimmt.

Die Verbindungen der Formel I gemäss Beispiel 1 zeigen gute Wirkung im obigen Test.

Beispiel 4: Wirkung gegen Aedes aegypti (Larven)

Auf die Oberfläche von 150 ml Wasser, das sich in einem Behälter befindet, wird so viel einer 0,1%igen acetonischen Lösung des Wirkstoffes pipettiert, dass eine Konzentration von 400 ppm erhalten wird. Nach Verdunsten des Acetons wird der Behälter mit 30 bis 40 2-tägigen Aedes-Larven beschickt. Nach 2 und 7 Tagen wird die Mortalität geprüft.

Die Verbindungen der Formel I gemäss Beispiel 1 zeigen gute Wirkung im obigen Test.

Beispiel 5: Frassgift-Wirkung gegen Laodelphax striatellus und Nilaparvata lugens (Nymphen);

Der Test wird an wachsenden Pflanzen durchgeführt. Dazu werden jeweils 4 Reispflanzen (Dicke des Stengels 8 mm) mit einer Höhe von ca. 20 cm in Töpfe (Durchmesser von 8 cm) eingepflanzt.

Die Pflanzen werden auf einem Drehteller mit 100 ml einer acetonischen Lösung enthaltend 400 ppm des Wirkstoffes besprüht. Nach dem Antrocknen des Spritzbelages erfolgt die Besiedlung jeder Pflanze mit je 20 Nymphen der Testtiere im dritten Stadium. Um die Zikaden am Entweichen zu hindern, wird über die besiedelten Pflanzen jeweils ein beidseitig offener Glaszylinder gestülpt und dieser mit einem Gaze-Deckel abgedeckt. Die Nymphen werden bis zum Erreichen des folgenden Entwicklungsstadiums über 10 Tage an der

behandelten Pflanze gehalten. Die Auswertung auf %-Mortalität erfolgt 1, 4 und 8 Tage nach der Behandlung.
Die Verbindungen der Formel I gemäss Beispiel 1 zeigen gute Wirkung in diesem Test.

Beispiel 6: Ovizide Wirkung gegen Laodelphax striatellus und Nilaparvata lugens;

Der Test wird an wachsenden Pflanzen durchgeführt. Jeweils 4 Reispflanzen (Dicke des Stengels 8 mm, Höhe ca. 20 cm) werden in Töpfe (Durchmesser von 8 cm) eingepflanzt.
Die Pflanzen werden auf einem Drehteller mit 100 ml einer acetonischen Lösung enthaltend 400 ppm des Wirkstoffes besprüht. Nach dem Antrocknen des Spritzbelages wird jede Pflanze mit 3 adulten Weibchen besiedelt. Um die Tiere am Entweichen zu hindern, wird über jede besiedelte Pflanze ein Glaszylinder gestülpt und dieser mit einem Gaze-Deckel abgedeckt. Die Weibchen bleiben 4 Tage zur Eiablage auf der behandleten Pflanze und werden dann entfernt.
Etwa 8 Tage nach Besiedelung schlüpfen die jungen Zikaden, und es erfolgt die Auszählung. Aus dem Vergleich der Anzahl geschlüpfter Larven auf den behandelten Pflanzen zu den auf unbehandelten Kontrollpflanzen geschlüpften Tieren wird die prozentuale Mortalität bestimmt.
Die Verbindungen der Formel I gemäss Beispiel 1 zeigen in obigem Test gute ovizide Wirkung.

Beispiel 7: Insektizide Frassgift-Wirkung gegen Spodoptera littoralis und Heliothis virescens

Ca. 25 cm hohe eingetopfte Baumwollpflanzen werden mit wässrigen Wirkstoffemulsionen besprüht, die den Wirkstoff in einer Konzentration von 400 ppm enthalten.
Nach dem Antrocknen des Sprühbelages werden die Baumwollpflanzen mit Spodoptera littoralis- bzw. Heliothis virescens-Larven im ersten larvalen Stadium besiedelt. Der Versuch wird bei 24°C und etwa 60 % relativer Luftfeuchtigkeit durchgeführt. Nach 120 Stunden wird die %-Mortalität der Test-Insekten gegenüber unbehandelten Kontrollen bestimmt.
Die Verbindungen Nr. 2 und 3 gemäss Beispiel 1 zeigen 80-100%ige Wirkung in diesem Test gegen Heliothis- bzw. Spodoptera-Larven; die Verbindungen 4 bis 9 zeigen 80-100%ige Wirkung gegen Spodoptera-Larven.

Beispiel 8: Wirkung gegen Nephotettix cincticeps (Nymphen)

Der Test wird an wachsenden Pflanzen durchgeführt. Dazu werden ca. 20 Tage alte Reispflanzen mit einer Höhe von etwa 15 cm in Töpfe (Durchmesser 5,5 cm) eingepflanzt.
Die Pflanzen werden auf einem Drehteller mit jeweils 100 ml einer acetonischen Lösung enthaltend 400 ppm des zu prüfenden Wirkstoffs besprüht. Nach dem Antrocknen des Spritzbelages erfolgt die Besiedlung jeder Pflanze mit je 20 Nymphen der Testtiere im zweiten oder dritten Stadium. Um die Zikaden am Entweichen zu hindern, wird über die besiedelten Pflanzen jeweils ein Plexiglaszylinder gestülpt und dieser mit einem Gaze-Deckel abgedeckt. Die Nymphen werden für 5 Tage an der behandelten Pflanze, die mindestens 1 mal nachgegossen werden muss, gehalten. Der Versuch wird bei einer Temperatur von ca. 23°C, bei 55 % relativer Luftfeuchtigkeit und mit einer Belichtungsperiode von 16 Stunden durchgeführt.
Die erfindungsgemässen Verbindungen der Formel I gemäss Beispiel 1 zeigen in diesem Test gute Wirkung.

Beispiel 9: Frassgift- und Kontakt-Wirkung auf Laodelphax striatellus und Nilaparvata lugens (Nymphen)

Der Test wird an wachsenden Pflanzen durchgeführt. Dazu werden jeweils 4 Reispflanzen (Dicke des Stengels 8 mm) mit einer Höhe von ca. 20 cm in Töpfe (Durchmesser von 8 cm) eingepflanzt.
Die Pflanzen werden auf einem Drehteller mit 100 ml einer acetonischen Lösung enthaltend 400 ppm des Wirkstoffes besprüht. Nach dem Antrocknen des Spritzbelages erfolgt die Besiedlung jeder Pflanze mit je 20 Nymphen der Testtiere im dritten Stadium. Um die Zikaden am Entweichen zu hindern, wird über die besiedelten Pflanzen jeweils ein beidseitig offener Glaszylinder gestülpt und dieser mit einem Gaze-Deckel abgedeckt. Die Nymphen werden bis zum Erreichen des folgenden Entwicklungsstadiums über 10 Tage an der behandelten Pflanze gehalten. Die Auswertung auf %-Mortalität erfolgt 1, 4 und 8 Tage nach der Behandlung.
Die Verbindungen Nr. 1, 3, 5, 6 und 8 bis 12 gemäss Beispiel 1 zeigen 80-100 %-ige Wirkung in diesem Test gegen Nilaparvata lugens.

Beispiel 10: Systemische Wirkung auf Nilaparvata lugens (Wasser)

Etwa 10 Tage alte Reispflanzen (ca. 10 cm hoch) werden in einen Plastik-Becher eingestellt, der 20 ml einer wässrigen Emulsions-Zubereitung des zu prüfenden Wirkstoffes in einer Konzentration von 100 ppm enthält und mit einem Löcher aufweisenden Plastikdeckel abgeschlossen ist. Die Wurzel der Reispflanze wird durch ein Loch in dem Plastikdeckel in die wässrige Test-Zubereitung geschoben. Das Loch wurde dann mit Watte abgedichtet, um die Pflanze zu fixieren und den Einfluss der Gasphase aus der Test-Zubereitung auszuschalten. Dann wird die Reispflanze mit 20 Nymphen von Nilaparvata lugens im N 2 bis N 3 Stadium besiedelt und mit einem Plastikzylinder abgedeckt. Der Versuch wird bei 20°C und 60 % relativer Luftfeuchtigkeit mit einer Beleuchtungsperiode von 16 Stunden durchgeführt. Nach fünf Tagen wird auf die

Anzahl der abgetöteten Testtiere, im Vergleich zu unbehandelten Kontrollen, bonitiert. Damit wird festgestellt, ob der über die Wurzel aufgenommene Wirkstoff, die Testtiere an den oberen Pflanzenteilen abtötet.

Die Verbindung Nr. 3 gemäss Beispiel 1 zeigt im obigem Test 80-100%-ige Wirkung.

Beispiel 11: Wirkung gegen Bodeninsekten (Diabrotica balteata)

Es werden 5 Maiskeimlinge von 1-3 cm Länge sowie eine Filterpapier-Rondelle in eine wässrige Wirkstofflösung enthaltend etwa 4 Vol.-% Aceton eingetaucht. Der Wirkstoffgehalt der verwendeten Lösung beträgt 400 und 12,5 ppm. Die eingetauchte Filterpapier-Rondelle wird auf den Boden eines Kunststoff-Bechers (Inhalt 200 ml) gelegt und darauf wird eine trockene Filterpapier-Rondelle sowie die Maiskeimlinge und 10 Larven von Diabrotica balteata im 2. oder 3. Larvalstadium gegeben. Der Ansatz wird bei ca. 24°C und 40-60 % relativer Luftfeuchtigkeit und Tageslicht gehalten. Die Bonitur erfolgt nach 10 Tagen gegenüber unbehandelten Kontrollansätzen.

Die Verbindungen Nr. 2 und 3 gemäss Beispiel 1 zeigen in diesem Test bei 12,5 ppm 80-100%-ige Wirkung; die Verbindungen Nr. 1, 4 bis 9, 11 und 12 zeigen bei 400 ppm 100 %-ige Wirkung.

Beispiel 12: Wirkung gegen Bodeninsekten (Diabrotica balteata) in Erde

Es werden 350 ml Erde (bestehend aus 95 Vol.-% Sand und 5 Vol.-% Torf) mit jeweils 150 ml einer wässrigen Emulsionszubereitung vermischt, die den zu prüfenden Wirkstoff in einer Konzentration von 0,75 ppm enthält. Dann werden Plastikbecher, die einen oberen Durchmesser von ca. 10 cm haben, mit der so behandelten Erde teilweise gefüllt. Pro Becher werden zehn Larven von Diabrotica balteata im dritten Larvalstadium eingesetzt, vier Maiskeimlinge eingepflanzt und die Becher mit Erde aufgefüllt. Die gefüllten Becher werden mit Plastikfolie abgedeckt und bei einer Temperatur von etwa 22°C gehalten. Zehn Tage nach dem Ansatz wird die in den Bechern enthaltene Erde abgesiebt und die zurückbleibenden Larven hinsichtlich ihrer Mortalität geprüft.

Die erfindungsgemässen Verbindungen Nr. 1 bis 12 gemäss Beispiel 1 zeigen in diesem Test eine Wirkung von 80-100 % (Mortalität).

Beispiel 13: Wirkung gegen Tetranychus urticae (OP-sensible) und Tetranychus cinnabarinus (OP-tolerant).

Die Primärblätter von Phaseolus vulgaris-Pflanzen werden 12 Stunden vor dem Versuch auf akarizide Wirkung mit einem infestierten Blattstück aus einer Massenzucht von Tetranychus urticae (OP-sens.) oder Tetranychus cinnabarinus (OP-tol.) belegt (Mischpopulation). Die Toleranz bezieht sich auf die Verträglichkeit gegenüber Diazinon.

Die so behandelten infestierten Pflanzen werden mit einer Versuchslösung in Emulsionsform enthaltend 400 ppm der zu prüfenden Verbindung bis zur Tropfnässe besprüht.

Nach 24 Stunden und wiederum nach 6 (T. urticae) bzw. 7 Tagen (T. cinnabarinus) werden Imagines und Larven (alle beweglichen Stadien) sowie abgelegte Eier unter dem Binokular auf lebende und tote Individuen ausgewertet.

Man verwendet pro Testspezies eine Pflanze. Während des Versuchsverlaufs stehen die Pflanzen in Gewächshauskabinen bei 25°C und etwa 50-60 % rel. Luftfeuchtigkeit.

Verbindungen der Formel I gemäss Beispiel 1 zeigen in diesem Versuch gute Wirkung gegen Tetranychus urticae und Tetranychus cinnabarinus. So erwiesen sich die Verbindungen Nr. 5, 8 und 9 als 80-100 %ig wirksam gegen Tetranychus cinnabarinus.

Beispiel 14:

Wirkung gegen tierparasitäre Milben

Von mit Dermanyssus gallinae befallenen Hühnern werden Ansätze bestehend aus etwa 50 Milden verschiedener Stadien (Mischpopulation: Larven, Nymphen und Adulte) entnommen. Die Milbenansätze werden jeweils mit einer wässrigen Emulsion, Suspension bzw. Lösung enthaltend 400 ppm des zu prüfenden Wirkstoffes benetzt. Hierzu werden die Milbenansätze in einem Reagenzglas mit der den Wirkstoff enthaltenden flüssigen Zubereitung übergossen; die Flüssigkeit wird anschliessend mit Hilfe eines Wattebausches aufgesogen. Die so benetzten und behandelten Milden verbleiben während 72 Stunden in dem Reagenzglas. Nach dieser Zeit wird die Abtötung der behandelten Milben gegenüber unbehandelten Kontrollansätzen ermittelt.

Die Verbindungen gemäss dem vorstehenden Beispiel 1 zeigen gute Wirkung im obigen Test.

Beispiel 15: Wirkung gegen Lucilia sericata

Zu 9 ml eines Zuchtmediums wird bei 50°C ein ml einer 0,1 % Aktivsubstanz enthaltenden wässrigen Zubereitung hinzugefügt. Dann werden ca. 30 frisch geschlüpfte Lucilia sericata-Larven zum Zuchtmedium

gegeben. Nach 48 und 96 Stunden wird die insektizide Wirkung durch Ermittlung der Abtötungsrate festgestellt.

Verbindungen der Formel I gemäss Beispiel 1 zeigen in diesem Test gute Wirkung gegen Lucilia sericata.

Beispiel 16: Kontaktwirkung auf Aphis craccivora

In Töpfen angezogene 4-5 Tage alte Vicia faba-Keimlinge werden vor Versuchsbeginn mit je ca. 200 Individuen der Spezies Aphis craccivora besiedelt. Die so behandelten Pflanzen werden 24 Stunden später mit einer wässrigen Emulsions-Zubereitung enthaltend 400 ppm der zu prüfenden Verbindung bis zur Tropfnässe direkt besprüht. Man verwendet pro Test-Verbindung zwei Pflanzen. Eine Auswertung der erzielten Abtötungsrate erfolgt nach weiteren 24 und 72 Stunden. Der Versuch wird bei 21-22°C und einer rel. Luftfeuchtigkeit von etwa 55 % durchgeführt.

Verbindungen Nr. 5 bis 9 gemäss Beispiel 1 zeigen 80-100 %ige Wirkung in diesem Test.

Beispiel 17: Ovizide Wirkung auf Heliothis virescens

Entsprechende Mengenanteile einer benetzbaren pulverförmigen Formulierung, enthaltend 25 Gew. % des zu prüfenden Wirkstoffes, werden mit so viel Wasser vermischt, dass sich eine wässrige Emulsion mit einer Wirkstoffkonzentration von 400 ppm ergibt.

In diese wirkstoffhaltige Emulsion werden eintägige Eigelege von Heliothis auf Cellophan® während drei Minuten eingetaucht und dann auf Rundfiltern abgenutscht. Die so behandelten Gelege werden in Petrischalen ausgelegt und in der Dunkelheit aufbewahrt. Nach 6 bis 8 Tagen wird die Schlupfrate im Vergleich zu unbehandelten Kontrollen festgelegt.

Die Verbindungen Nr. 1, 2, 4 bis 7 und 8 gemäss Beispiel 1 zeigen im obigen Test 80-100 %ige Wirkung.

Beispiel 18: Wirkung gegen Zecken

Als Testtiere werden mit Blut vollgesogene adulte Weichen der Rinderzecke Boophilus microplus verwendet. Es werden je 10 Zecken eines OP-resistenten Stammes (z.B. vom Biarra-Stamm) und eines normal empfindlichen Stammes (z.B. vom Yeerongpilly-Stamm) behandelt. Die Zecken werden auf mit Doppelklebeband bezogenen Platten dorsal fixiert und dann mit einem mit wässrigen Emulsionen bzw. Lösungen enthaltend 400 ppm der zu untersuchenden Verbindung getränkten Wattebausch während 1 Stunde bedeckt. Nach Entfernung des Wattebausches werden die Zecken über Nacht bei 24°C getrocknet und anschliessend in einem klimatisierten Raum bei konstanten Bedingungen (28°C, 80 % rel. Luftfeuchtigkeit) gehalten, und zwar für 4 Wochen bis zum Ende der Eiablage und Beginn des Larvenschlupfes. Zur Auswertung wird die Mortalität sowie die prozentuale Hemmung der Ablage von fertilen Eiern (Blockierung der Embryogenese bzw. des Schlupfes) gegenüber unbehandelten Kontrollen ermittelt.

Die Verbindungen der Formel I gemäss Beispiel 1 zeigen gute Wirkung in obigem Test.

Beispiel 19: Wirkung gegen Zecken: Abtötungswirkung in verschiedenen Entwicklungsstadien

Als Testobjekte werden Larven (jeweils ca. 50), Nymphen (jeweils ca. 25) oder Imagines (jeweils ca. 10) der Zeckenarten Rhipicephalus bursa, Amblyomma hebraeum und Boophilus microplus verwendet. Die Testtiere werden für kurze Zeit in wässrige Emulsionen der zu untersuchenden Substanzen mit einer Konzentration von 800 ppm getaucht. Die in Teströhrchen befindlichen Emulsionen werden dann mit Watte aufgenommen und die benetzten Testtiere in den so kontaminierten Röhrchen belassen. Die Auswertung (% - Mortalität) erfolgt für Larven nach 3 Tagen und für Nymphen und Imagines nach 14 Tagen.

Verbindungen der Formel I gemäss Beispiel 1 sind in diesem Test gut wirksam.

**Patentansprüche**

1. Verbindung der Formel I

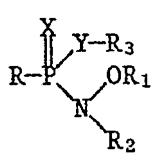

(I)

worin R $C_1$-$C_4$-Alkyl oder $C_1$-$C_4$-Alkoxy;

$R_1$ und $R_3$ unabhängig voneinander $C_1$-$C_4$-Alkyl; $R_2$ Wasserstoff, $C_1$-$C_4$-Alkyl oder zusammen mit $R_1$ den Rest $-(CH_2)_4-$; und X und Y unabhängig voneinander Sauerstoff oder Schwefel bedeuten, mit der Massgabe, dass mindestens einer der Reste X oder Y Schwefel bedeutet, wenn $R_2$ die Bedeutung von Wasserstoff hat.

2. Verbindung der Formel I gemäss Anspruch 1, dadurch gekennzeichnet, dass R $C_1$-$C_4$-Alkyl oder $C_1$-$C_4$-Alkoxy; $R_1$, $R_2$ und $R_3$ unabhängig voneinander $C_1$-$C_4$-Alkyl oder $R_1$ zusammen mit $R_2$ den Rest $-(CH_2)_4-$ ; und X und Y unabhängig voneinander Sauerstoff oder Schwefel bedeuten.

3. Verbindung der Formel I gemäss Anspruch 2, dadurch gekennzeichnet, dass R $C_1$-$C_4$-Alkyl; $R_1$ und $R_2$ Methyl oder zusammen den Rest $-(CH_2)_4-$ ; $R_3$ $C_3$-$C_4$-Alkyl; X Sauerstoff oder Schwefel und Y Schwefel bedeuten.

4. Verbindung der Formel I gemäss einem der Ansprüche 1 bis 3, dadurch gekennzeichnet, dass R Methyl oder Aethyl bedeutet.

5. Verbindung der Formel I gemäss einem der Ansprüche 1 bis 4, dadurch gekennzeichnet, dass X und Y Schwefel bedeuten.

6. Verbindung der Formel I gemäss einem der Ansprüche 1 bis 5, dadurch gekennzeichnet, dass $R_3$ n-Propyl, i-Propyl, s-Butyl oder t-Butyl bedeutet.

7. Verbindung gemäss Anspruch 6 der Formel

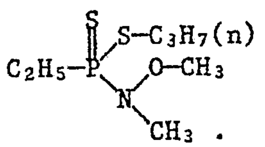

8. Verbindung gemäss Anspruch 6 der Formel

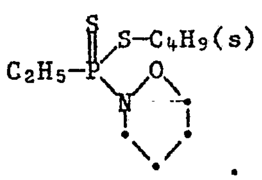

9. Verbindung gemäss Anspruch 6 der Formel

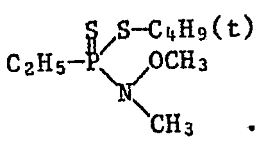

10. Verbindung gemäss Anspruch 6 der Formel

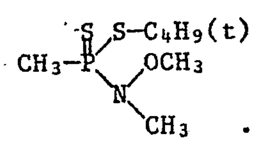

11. Verbindung gemäss Anspruch 6 der Formel

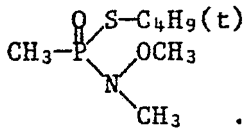

12. Verfahren zur Herstellung einer Verbindung der Formel I gemäss einem der Ansprüche 1 bis 11, dadurch gekennzeichnet, dass man eine Verbindung der Formel II

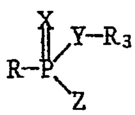

(II)

mit einer Verbindung der Formel III

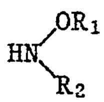

(III)

umsetzt, wobei in der Formel II und III
R, $R_1$, $R_2$, $R_3$, X und Y die in den Ansprüchen 1 bis 6 angegebenen Bedeutungen haben und Z für Halogen, vorzugsweise Chlor, steht.

13. Schädlingsbekämpfungsmittel, welches als aktive Komponente eine Verbindung gemäss einem der Ansprüche 1 bis 11 zusammen mit geeigneten Trägern und/oder anderen Zuschlagstoffen enthält.

14. Verwendung einer Verbindung gemäss einem der Ansprüche 1 bis 11 zur Bekämpfung von Insekten und Vertretern der Ordnung Akarina an Tieren und Pflanzen.

15. Verwendung gemäss Anspruch 14 zur Bekämpfung von pflanzenschädigenden Insekten.

16. Verwendung gemäss Anspruch 15 zur Bekämpfung larvaler Stadien pflanzenschädigender Insekten.

17. Verwendung gemäss Anspruch 14 zur Bekämpfung von Zecken und Milben an Haus- und Nutztieren.

18. Verfahren zur Bekämpfung von Insekten und Vertretern der Ordnung Akarina, dadurch gekennzeichnet, dass man die Schädlinge bzw. deren verschiedene Entwicklungsstadien und/oder ihren Aufenthaltsort mit einer pestizid wirksamen Menge einer Verbindung der Formel I gemäss einem der Ansprüche 1 bis 11 oder mit einem Mittel enthaltend neben Zusatz- und Trägerstoffen eine pestizid wirksame Menge dieser Verbindung, in Kontakt bringt oder behandelt.

Europäisches Patentamt

# EUROPÄISCHER RECHERCHENBERICHT

Nummer der Anmeldung

EP 88 81 0456

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-3 316 891 (BAYER AG)<br>* Ansprüche *<br>--- | 1,13-18 | C 07 F 9/44<br>C 07 F 9/24<br>C 07 F 9/65<br>A 01 N 57/28 |
| Y | FR-A-2 151 100 (BAYER AG)<br>* Ansprüche *<br>--- | 1,13-18 | |
| Y | US-A-4 071 533 (R.G. STEIN)<br>* Insgesamt *<br>----- | 1,13-18 | |
| | | | **RECHERCHIERTE SACHGEBIETE (Int. Cl.4)** |
| | | | C 07 F 9/00<br>A 01 N 57/00 |

Der vorliegende Recherchenbericht wurde für alle Patentansprüche erstellt

| Recherchenort | Abschlußdatum der Recherche | Prüfer |
|---|---|---|
| DEN HAAG | 30-09-1988 | BESLIER L.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)